# EUROPÄISCHE PATENTSCHRIFT

(11) **EP 4 385 372 B1**
(45) Veröffentlichungstag und Bekanntmachung des Hinweises auf die Patenterteilung: **29.01.2025**
(21) Anmeldenummer: 24173721.2
(22) Anmeldetag: 14.06.2023
(51) Int. Cl.: A47J 31/06, A47J 31/20

(54) **VORRICHTUNG UND VERFAHREN ZUR AUTOMATISIERTEN HERSTELLUNG EINES BRÜHGETRÄNKS**
DEVICE AND METHOD FOR THE AUTOMATED PRODUCTION OF A BREWED BEVERAGE
DISPOSITIF ET PROCÉDÉ DE PRODUCTION AUTOMATISÉE D'UNE BOISSON INFUSÉE

(30) Priorität: 24.08.2022 DE 102022121349
(43) Veröffentlichungstag der Anmeldung: 19.06.2024
(62) Teilanmeldung aus: 23179146.8
(73) Patentinhaber: Tröltzsch, Carin-Martina, 51515 Kürten (DE); Veltins, Michael, 61348 Bad Homburg (DE)
(72) Erfinder: Pircher, Karl Emilio, 39050 Deutschnofen (IT)
(74) Vertreter: Körfer, Thomas

(56) Entgegenhaltungen:
- CN-A- 107 432 677
- DE-A1- 102014 017 226
- DE-A1- 102017 003 909
- DE-A1- 102018 127 644
- DE-A1- 3 538 037
- DE-A1- 4 433 474
- DE-A1- 4 444 181
- JP-A- H08 299 182
- JP-B2- 5 372 459

## Beschreibung

Die Erfindung betrifft ein Verfahren zur automatisierten Herstellung eines Brühgetränks.

Brühgetränke insbesondere Tees ist eines der beliebtesten Getränke weltweit. Tee und andere Brühgetränke werden sehr häufig mit Hilfe von Teebeuteln zubereitet. Der Teebeutel wird dabei händisch in das Wasser eingebracht. Durch ständiges händisches Schwenken des Teebeutels werden die Aromen des Tees ausgewaschen. Nach einer bestimmten Zeit wird der Teebeutel aus dem Teewasser herausgenommen und der Tee ist bereit, getrunken zu werden. Alle diese vielen Arbeitsgänge müssen mit einem großen Zeitaufwand durchgeführt werden. Um den Vorgang zu vereinfachen, stehen Teebereitungsmaschinen zur Verfügung, bei welchen loser Tee in einen siebartigen Behälter eingebracht wird. Dieser Behälter wird in das Teewasser eingetaucht. Nach einer abgelaufenen Brühzeit wird der Behälter automatisch aus dem Teewasser entnommen und der Tee ist bereit, getrunken zu werden.

Die DE 35 38 037 A1 zeigt einen Brühgetränkebereiter. Der Brühgetränkebereiter hat ein C-förmiges Gerätegehäuse. Ein unterer freier Schenkel der C-Form bildet die Standfläche. An dessen Oberseite ist eine Warmhalteplatte angebracht. Auf die Warmhalteplatte ist eine Servierkanne mit einer großen deckseitigen Öffnung gestellt. Der obere freie Schenkel des Gerätegehäuses enthält einen Wasserbehälter, an dessen Boden eine elektrische Heizung zum Erhitzen von Wasser angeordnet ist. Eine Hubvorrichtung für eine Filterkammer enthält einen sich etwa vertikal erstreckenden Führungsstab, der durch die Führung nach unten aus dem Kopf ragt und an seinem unteren Ende mit der Filterkammer lösbar verbunden ist. Die Hubvorrichtung bewegt die Filterkammer in die Servierkanne zum Brühen des Getränks. Mit dem Bewegen der Filterkammer wird das Wasser aus dem Wasserbehälter in die Servierkanne abgelassen. Nach Ablauf einer vorgegebenen Zeit wird die Filterkammer durch die Hubvorrichtung aus der Servierkanne bewegt.

Die DE 10 2017 003 909 A1 zeigt einen Getränkezubereiter für Heißgetränke. Der Getränkezubereiter weist eine Vorrichtung zur Zubereitung von Tee, durch die sich das Teegetränk außerhalb der Maschine zubereiten lässt, auf. Die Vorrichtung zur Zubereitung von Tee weist eine Klammer auf, die verfahrbar bzw. bewegbar an der Teezubereitungseinrichtung am Gehäuse des Getränkezubereiters angeordnet ist. Die Klammer lässt sich zwischen einer oberen Stellung und einer unteren Stellung auf und ab bewegen. Dabei wird in der Klammer ein Teebeutel gehalten, der in eine Tasse abgesenkt werden kann. Hierfür ist ein innerhalb des Gehäuses angeordneter Linearantrieb vorgesehen.

Die JP H08 299 182 A zeigt einen Teespender zum automatischen Aufbrühen von Tee. Der Teespender enthält einen Hauptkörper mit einem darin vorgesehenen Wasserspeichertank. Am Boden des Wasserspeichers ist ein Wasserführungsrohr mit einem Rückschlagventil angebracht. Das Wasserführungsrohr wird durch eine Heizung beheizt. Die Heizung ist gleichzeitig zum Beheizen eines Extraktionsbehälters, in Form eines Serviergefäßes, vorgesehen. Das Wasser im Wasserspeicher wird durch die Wasserführungsleitung mit Hilfe des Rückschlagventils und einer Zirkulationsleitung zirkuliert, bis es eine vorgegebene Temperatur erreicht hat. Wenn das Wasser im Wasserspeichertank eine vorgegebene Temperatur erreicht hat, wird das Wasser aus der Wasserführungsleitung durch die Wasserzufuhrleitung in den Extraktionsbehälter geleitet. Gleichzeitig wird ein Teesieb mit darin eingebrachten Teeblättern für eine bestimmte Zeit in den Extraktionsbehälter eingetaucht. Das Teesieb wird dabei von einem Teesiebhalteelement abnehmbar gehalten. Das Teesiebhalteelement ist an einem Gleitelement befestigt, das vertikal gleitend an einer aufrecht stehenden Führungsstange angebracht ist. Ein Riemen überträgt die Drehung eines Motors über eine Riemenscheibe auf das Gleitelement. Das Eintauchen des Teesiebs erfolgt durch diesen linearen Antrieb. Nach Ablauf der Eintauchzeit schaltet das Steuergerät den Motor so ein, dass das Teesieb in eine vorgegebene Position angehoben wird. Der Brühvorgang ist somit abgeschlossen.

Nachteilig an dem oben beschriebenen Brühgetränkebereiter ist die aufwändige Mechanik und die aufwändig zu handhabende Filterkammer.

Der Erfindung liegt somit die Aufgabe zugrunde ein Verfahren zu schaffen, das die Zubereitung eines Brühgetränks vereinfacht.

Die Aufgabe wird durch ein Verfahren zurautomatischen Zubereitung eines Brühgetränks mit den Merkmalen des Hauptanspruchs gelöst. Vorteilhafte Weiterbildungen sind Gegenstand des hierauf rückbezogenen Unteranspruchs.

Eine Vorrichtung zur Durchführung des erfindungsgemäßen Verfahrens zur automatischen Zubereitung eines Brühgetränks enthält eine Gefäßaufnahme zur Aufnahme eines Trinkgefäßes oder eines Serviergefäßes. Die Vorrichtung zur Zubereitung eines Brühgetränks enthält weiter eine Haltvorrichtung zum Halten eines Behältnisses zur Aufnahme einer Brühsubstanz, insbesondere Tee, wobei die Haltevorrichtung mindestens ein Sperrelement aufweist. Das Behältnis mit der Brühsubstanz ist durch das mindestens eine Sperrelement an der Haltevorrichtung arretierbar. Eine Verschiebeeinrichtung ist in der Vorrichtung zur Zubereitung eines Brühgetränks zum Verschieben der Haltevorrichtung vorgesehen, wobei die Verschiebeinrichtung dazu ausgelegt ist, dass die Haltevorrichtung während der Zubereitung des Brühgetränks in dem Trinkgefäß oder in dem Serviergefäß auf und ab und/oder hin und her und/oder in Rotation bewegt wird.

Mit dieser Vorrichtung zur Durchführung des erfindungsgemäßen Verfahrens lässt sich in besonders vorteilhafter Weise automatisiert ein Brühgetränk herstellen. Durch die Haltevorrichtung in Kombination mit dem mindestens einen Sperrelement ist es besonders vorteilhaft möglich, eine vorportionierte Brühsubstanz, die in einem entsprechende Behältnisses, z.B. einem Teebeutel, zur Aufnahme einer Brühsubstanz verpackt ist, in der Vorrichtung zu verwenden.

Die Vorrichtung zur Durchführung des erfindungsgemäßen Verfahrens zur automatischen Zubereitung eines Brühgetränks weist bevorzugt eine Wasserbevorratungseinrichtung, eine Pumpeinrichtung und/oder eine Wassererhitzungseinrichtung auf. So kann in besonders vorteilhafter Weise heißes Wasser und/oder zu erhitzendes Wasser durch die Vorrichtung automatisch in das Trinkgefäß oder das Serviergefäß eingefüllt werden. Durch die Wassererhitzungseinrichtung ist es in vorteilhafter Weise möglich, das Wasser vor oder während des Einfüllens zu erhitzen.

Bevorzugt weist die Halteeinrichtung der Vorrichtung zur Zubereitung eines Brühgetränks einen röhrenförmigen Körper auf. An einer dem Trinkgefäß oder dem Serviergefäß zugewandten Öffnung des röhrenförmigen Körpers sind die Sperrelemente bewegbar gehalten. Durch die röhrenförmige Gestalt des Körpers der Haltevorrichtung lässt sich in besonders vorteilhafter und einfacher Weise ein Behältnis zur Aufnahme einer Brühsubstanz in die Haltevorrichtung einführen. Das mindestens eine beweglich in der Haltevorrichtung gehaltene Sperrelement verhindert einerseits in besonders vorteilhafter Weise ein ungewolltes Herausrutschen des Behältnisses zur Aufnahme einer Brühsubstanz. Andererseits ermöglichen die beweglich gehaltenen Sperrelemente in besonders vorteilhafter Weise ein Freigeben des Behältnisses zur Aufnahme einer Brühsubstanz zum Auswerfen aus der Haltevorrichtung.

Eine Wand der Haltevorrichtung weist besonders bevorzugt an einer dem Trinkgefäß oder dem Serviergefäß zugewandten Seite mindestens eine Durchströmöffnung auf. Die mindestens eine Durchströmöffnung ist dabei so ausgelegt, dass eine in dem Trinkgefäß oder dem Serviergefäß eingefüllte Flüssigkeit das Behältnis mit der Brühsubstanz durchströmen kann. Über die mindestens eine Durchströmöffnung wird das Behältnis mit der Brühsubstanz in besonders vorteilhafter Weise durch die im Trinkgefäß oder dem Serviergefäß befindliche Flüssigkeit so durchströmt, dass die in der Brühsubstanz gebundenen Aroma und Inhaltsstoffe besonders effektiv gelöst werden.

Die Gefäßaufnahme dieser Vorrichtung zur Durchführung des erfindungsgemäßen Verfahrens zur automatischen Zubereitung eines Brühgetränks weist bevorzugt eine Sensorik auf, um festzustellen, ob sich ein Trink- oder Serviergefäß auf der Gefäßaufnahme befindet. Durch das Feststellen, ob sich eine Trink- bzw. Serviergefäß in der Vorrichtung befindet, lässt in vorteilhafter Weise die Zubereitung des Brühgetränks steuern. Insbesondere wird die Bewegung der Haltevorrichtung in Abhängigkeit von den durch den Sensor erfassten Ereignissen und Zuständen in vorteilhafter Weise so gesteuert, dass eine optimale Zubereitung des Brühgetränks erreicht wird.

Die Vorrichtung zur Durchführung des erfindungsgemäßen Verfahrens zur automatischen Zubereitung eines Brühgetränks weist bevorzugt einen Auffangbehälter auf, wobei der Auffangbehälter unter der Gefäßaufnahme angeordnet ist. Weiter bevorzugt weist die Gefäßaufnahme eine Öffnung auf, durch die das Behältnis mit der Brühsubstanz in den Auffangbehälter gelangen kann. So kann das Behältnis mit der Brühsubstanz vorteilhaftweise besonders hygienisch entsorgt werden. Dabei muss der Anwender nicht mit dem Behältnis mit der Brühsubstanz in Berührung kommen.

Bevorzugt weist die Haltevorrichtung an ihrem oberen Ende eine Einführöffnung auf, die so ausgelegt ist, dass durch die Einführöffnung das Behältnis in die Haltevorrichtung kraftfrei eingeführt werden kann. Die Haltevorrichtung ist weiter so ausgelegt, dass das Behältnis mit der Brühsubstanz bis zu dem Sperrelement gleiten kann. Eine so dimensionierte Haltevorrichtung ermöglicht in besonders vorteilhafter Weise ein werkzeugfreies Einbringen des Behältnisses mit der Brühsubstanz in die Haltevorrichtung. Dabei ist durch die Auslegung der Haltevorrichtung ein Platzieren des Behältnisses mit der Brühsubstanz in einer optimalen Position gegeben.

Das Sperrelement nimmt bevorzugt eine Halteposition oder eine Freigabeposition ein. In der Halteposition ist die Öffnung an einem unteren Ende der Haltevorrichtung durch das Sperrelement so gestaltet, dass die verbleibende Öffnung kleiner als die Dimension des Behältnisses mit der Brühsubstanz ist. Außerdem ist die Öffnung an einem unteren Ende die Haltevorrichtung mit dem Sperrelement in der Freigabeposition so bemessen, dass die Öffnung größer oder gleich der Dimension des Behältnisses mit der Brühsubstanz ist. Die Halteposition und Dimensionierung der unteren Öffnung der Haltevorrichtung halten in vorteilhafter Weise das Behältnis mit der Brühsubstanz während des Brühvorgangs in der Haltevorrichtung in einer gewünschten Position. In der Freigabeposition des Sperrelements ist es besonders vorteilhaft, wenn das Behältnis mit der Brühsubstanz nur durch dessen Gewichtskraft aus der Haltevorrichtung herausgleitet.

Die Verschiebeeinrichtung weist bevorzugt einen Antrieb, bevorzugt einen Linearantrieb und/oder Rotationsantrieb, auf. Mit diesem Antrieb lässt die Haltevorrichtung sich in vorteilhafter Weise entsprechend einem Bewegungsmuster auf und ab und/oder hin und her und/oder rotatorisch bewegen.

Bevorzugt weist das Sperrelement ein Federelement auf. Das Federelement ist dazu ausgelegt, das Sperrelement mit einer durch das Federelement zur Verfügung gestellten Federkraft in die Halteposition zu bewegen und/oder in der Halteposition zu halten. Das Federelement des Sperrelements ermöglicht einerseits in besonders vorteilhafter Weise ein Festhalten des Behältnisses zur Aufnahme einer Brühsubstanz in der Haltevorrichtung ohne Aktuator. Andererseits ermöglichen die Federelemente in besonders vorteilhafter Weise ein Freigeben des Behältnisses zur Aufnahme einer Brühsubstanz zum Auswerfen aus der Haltevorrichtung durch ein einfaches Überwinden der Federkraft.

Das Sperrelement weist bevorzugt einen Betätigungshebel auf. Dieser Betätigungshebel ist dazu ausgelegt, das Sperrelement in die Freigabeposition zu bewegen. So wird in vorteilhafter Weise ein Bewegen des Sperrelements zum Freigeben des Behältnisses ermöglicht, ohne mit der im Trinkgefäß oder in dem Serviergefäß befindlichen Flüssigkeit in Kontakt zu kommen. Außerdem lässt sich in vorteilhafter Weise mit Hilfe des Betätigungshebels eine notwendige Betätigungskraft anpassen.

Das Führungselement der Vorrichtung zur Durchführung des erfindungsgemäßen Verfahrens zur automatischen Zubereitung eines Brühgetränks weist bevorzugt einen Betätigungstrichter auf. Der dem mindestens einem Sperrelement zugewandte Durchmesser des Betätigungstrichters ist so bemessen, dass der Betätigungshebel in eine trichterförmige Öffnung des Betätigungstrichters hineingleiten kann. Der Betätigungstrichter verengt sich in seinem Durchmesser, sodass das Sperrelement über den Betätigungshebel in die Freigabeposition bewegt wird. Das Führungselement mit dem Betätigungstrichter ermöglicht in besonders vorteilhafter Weise ein Betätigen des Sperrelements unter Vermeidung eines zusätzlichen Antriebs.

In dem erfindungsgemäßen Verfahren zur automatischen Zubereitung eines Brühgetränks wird in einem ersten Schritt ein Trinkgefäß oder ein Serviergefäß in eine Gefäßaufnahme eingestellt. In einem weiteren Schritt wird ein Behältnis mit einer Brühsubstanz, insbesondere Tee, in eine Haltvorrichtung eingeführt.

In einem weiteren Schritt des erfindungsgemäßen Verfahrens wird Wasser in eine Wasserbevorratungseinrichtung eingefüllt. Nun erfolgt ein Verschieben der Haltevorrichtung, so dass das Behältnis mit der Brühsubstanz in dem Trinkgefäß oder in dem Serviergefäß platziert ist. Es folgt ein automatisches Pumpen oder Ablassen des Wassers in das Trinkgefäß oder das Serviergefäß. Nun wird der Verfahrensschritt eines automatischen auf und ab und/oder hin und her und/oder rotatorischen Bewegens der Haltevorrichtung in dem Trinkgefäß oder dem Serviergefäß durchgeführt. In einem weiteren Schritt erfolgt nach einer vorgegebenen Zeit das automatische Herausziehen des Behältnisses zur Aufnahme der Brühsubstanz aus dem Trinkgefäß oder aus dem Serviergefäß. Durch das Ausführen der Verfahrensschritte wird besonders vorteilhaft ein Brühgetränk automatisch zubereitet. Dabei werden die in der Brühsubstanz gewünschten Stoffe besonders optimal herausgelöst.

Die Verfahrensschritte des Pumpens oder Ablassens des Wassers erfolgen bevorzugt zusammen mit dem Schritt des Erhitzens des Wassers durch eine Wassererhitzungseinrichtung. So wird besonders vorteilhaft das Wasser bei Bedarf erhitzt, wodurch die Energie, die zum Warmhalten des Wassers notwendig ist, eingespart.

Dabei weist das erfindungsgemäße Verfahren nach dem Schritt des Herausziehens einen Verfahrensschritt des automatischen Prüfens der Gefäßaufnahme, ob ein Trinkgefäß oder ein Serviergefäß vorhanden ist, auf. Wenn das Trinkgefäß oder das Serviergefäß entnommen ist, wird der Verfahrensschritt des Freigebens der unteren Öffnung der Haltevorrichtung durch Bewegen eines Sperrelements der Halteeinrichtung in eine Freigabeposition durchgeführt. So kann in vorteilhafter Weise ein sauberes und hygienisches Entsorgen des Behältnisses mit der Brühsubstanz erfolgen.

Nachfolgend werden Ausführungsbeispiele der Erfindung anhand der Zeichnung beispielhaft beschrieben. In der Zeichnung zeigen:
- FIG. 1: eine Gesamtansicht der Vorrichtung zur Zubereitung eines Brühgetränks gemäß einem erfindungsgemäßen Ausführungsbeispiel;
- FIG. 2: eine seitlich Schnittansicht der Vorrichtung zur Zubereitung eines Brühgetränks gemäß einem erfindungsgemäßen Ausführungsbeispiel;
- FIG.3: eine Draufsicht der Haltevorrichtung mit der Verschiebevorrichtung der Vorrichtung zur Zubereitung eines Brühgetränks gemäß einem erfindungsgemäßen Ausführungsbeispiel;
- FIG. 4: eine Schnittdarstellung der Haltevorrichtung mit der Verschiebevorrichtung der Vorrichtung zur Zubereitung eines Brühgetränks gemäß dem erfindungsgemäßen Ausführungsbeispiel;
- FIG. 5: die Vorrichtung zur Zubereitung eines Brühgetränks mit internen Komponenten gemäß einem erfindungsgemäßen Ausführungsbeispiel;
- FIG. 6A: einen Abstreifer der Vorrichtung zur Zubereitung eines Brühgetränks im Grundzustand gemäß einem erfindungsgemäßen Ausführungsbeispiel;
- FIG. 6B: der Abstreifer der Vorrichtung zur Zubereitung eines Brühgetränks im ausgefahrenen Zustand gemäß einem erfindungsgemäßen Ausführungsbeispiel;
- FIG. 7: eine Halteeinrichtung mit schlitzförmigen Durchströmöffnungen gemäß einem erfindungsgemäßen Ausführungsbeispiel;
- FIG. 8A: eine Halteeinrichtung mit einem drehbaren Sperrelement im gesperrten Zustand gemäß einem erfindungsgemäßen Ausführungsbeispiel;
- FIG. 8B: eine Halteeinrichtung mit einem drehbaren Sperrelement im freigegeben Zustand gemäß einem erfindungsgemäßen Ausführungsbeispiel;
- FIG. 9A: eine Halteeinrichtung mit einem klappbaren Sperrelement im gesperrten Zustand gemäß einem erfindungsgemäßen Ausführungsbeispiel;
- FIG. 9B: eine Halteeinrichtung mit einem kappbaren Sperrelement im freigegeben Zustand gemäß einem erfindungsgemäßen Ausführungsbeispiel;
- FIG. 10A: eine Vorrichtung mit verschließbarer Öffnung in der Gefäßaufnahme in verschlossenem Zustand gemäß einem erfindungsgemäßen Ausführungsbeispiel;
- FIG. 10B: eine Vorrichtung mit verschließbarer Öffnung in der Gefäßaufnahme in offenem Zustand gemäß einem erfindungsgemäßen Ausführungsbeispiel;
- FIG. 11: ein Flussdiagramm eines Verfahrens zur automatischen Zubereitung eines Brühgetränks gemäß einem erfindungsgemäßen Ausführungsbeispiel;
- FIG. 12A-12H: eine grafische Darstellung zu den Verfahrensschritten des Verfahrens zur automatischen Zubereitung eines Brühgetränks gemäß einem erfindungsgemäßen Ausführungsbeispiel.

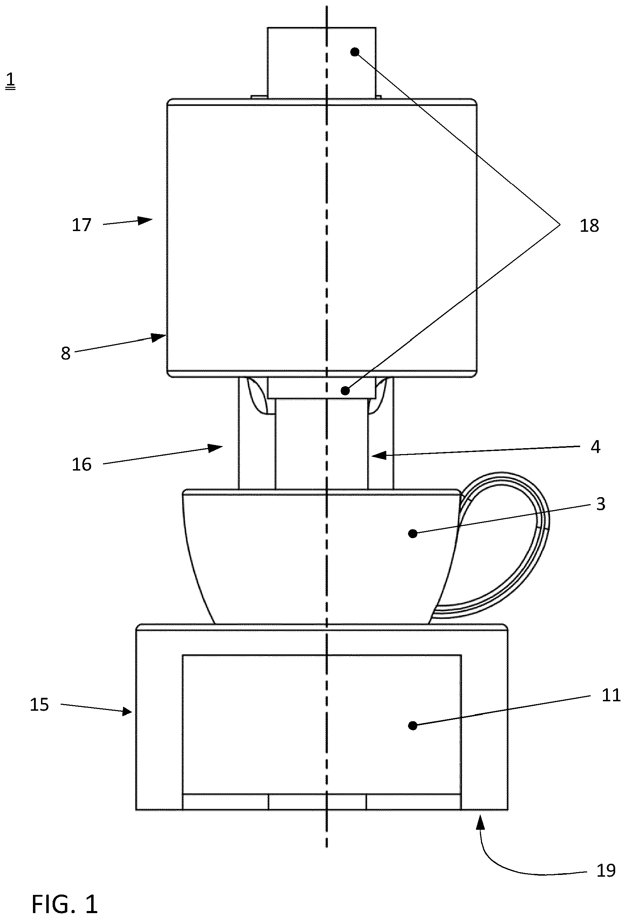

FIG. 1 zeigt eine Gesamtansicht der Vorrichtung 1 zur Zubereitung eines Brühgetränks gemäß einem erfindungsgemäßen Ausführungsbeispiel. Der Grundkörper der Vorrichtung 1 enthält ein Standelement 15, eine Säule 16 (in FIG. 1 teilweise durch ein Trinkgefäß 3 verdeckt dargestellt) und ein Kopfelement 17. Die Säule 16 verbindet das Standelement 15 und das Kopfelement 17.

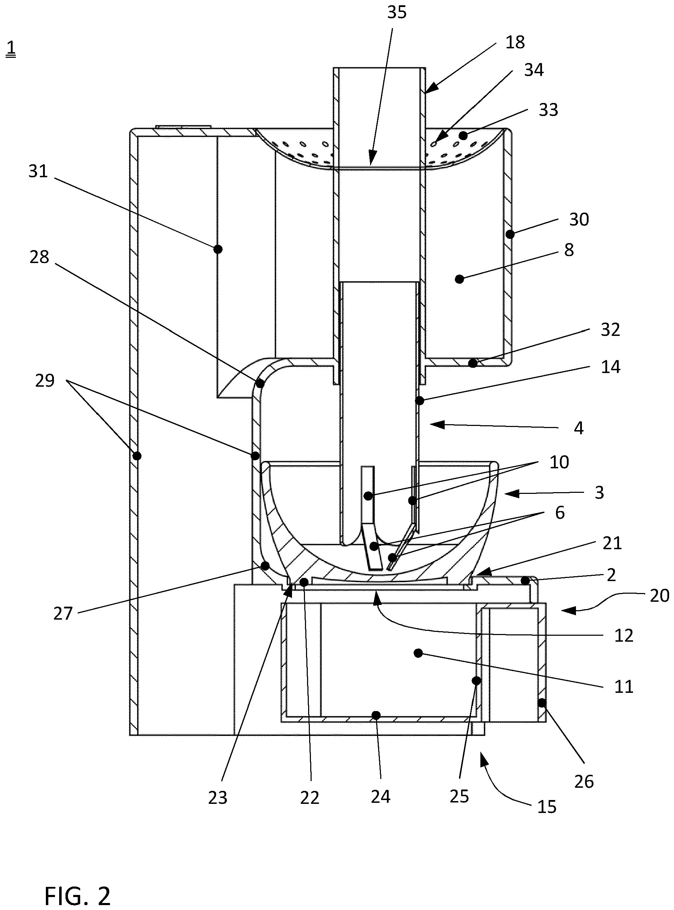

Das Standelement 15 weist eine Standfläche 19 auf, die dazu vorgesehen ist, die Vorrichtung kippsicher auf einer Unterlage, wie z.B. einem Tisch oder einer Küchenarbeitsfläche, aufzustellen. In dem Standelement 15 ist eine Aufnahme für einen Auffangbehälter 11 vorgesehen. In diesem Ausführungsbeispiel ist der Auffangbehälter 11 schubladenförmig ausgeführt. Die Aufnahme für den Auffangbehälter 11 erstreckt sich nach außen in eine Einschuböffnung 20 (in FIG. 2) für den Auffangbehälter 11. So lässt sich der Auffangbehälter einfach durch Herausziehen aus der Vorrichtung 1 zur Zubereitung eines Brühgetränks entnehmen und die darin aufgefangenen Behältnisse 5 zur Aufnahme einer Brühsubstanz lässt sich entsorgen. Der schubladenförmige Auffangbehälter 11 ist in FIG. 1 in das Standelement 15 eingeschoben dargestellt. Außerdem nimmt das Standelement ein Trinkgefäß 3 oder ein Serviergefäß (hier nicht dargestellt) auf.

Die Säule 16 verbindet, wie bereits beschrieben, Standelement 15 und Kopfelement 17. In der Säule 16 können verschiedene weiter Komponenten der Vorrichtung 1 zur Zubereitung eines Brühgetränks enthalten sein. Die Säule 16 kann beispielsweise eine Steuerung aufnehmen. Diese Steuerung ist bevorzugt eine elektronische Steuerung, die alle für die Bereitung eines Brühgetränks notwendigen Verfahrensschritte der Vorrichtung 1 steuert. In der Säule 16 kann in einem Ausführungsbeispiel eine Wasserbevorratungseinrichtung integriert sein.

Das Kopfelement 17 enthält ein Führungselement 18, in dem die Halteeinrichtung 4 verschiebbar gelagert ist. Das Kopfelement 17 wird im Folgenden näher beschrieben.

FIG. 2 zeigt eine Schnittdarstellung der Vorrichtung 1 zur Zubereitung eines Brühgetränks gemäß einem erfindungsgemäßen Ausführungsbeispiel. Wie bereits zu FIG. 1 beschrieben enthält der Grundkörper der Vorrichtung 1 ein Standelement 15, eine Säule 16 und ein Kopfelement 17. Der Grundkörper ist in diesem Ausführungsbeispiel einstückig ausgeführt. In anderen Ausführungsformen kann der Grundkörper auch aus mehreren Einzelkomponenten aufgebaut sein.

Das Standelement 15 enthält in diesem Ausführungsbeispiel eine Gefäßaufnahme 2 für ein Trinkgefäß 3. Die Gefäßaufnahme enthält eine Einsenkung 21. Diese Einsenkung 21 weist einen Innendurchmesser auf, der größer ist als ein Durchmesser einer Standfläche 22 des Trinkgefäßes 3. So kann das Trinkgefäße 3 kippsicher in die Gefäßaufnahme 2 eingestellt werden. Besonders vorteilhaft ist es, wenn durch die Einsenkung 21 ein Verrutschen des Trinkgefäßes 3 verhindert wird.

Die Gefäßaufnahme weist eine Sensorik auf, um festzustellen ob sich ein Trink- oder 3 Serviergefäß auf der Gefäßaufnahme 2 befindet. Diese Sensorik kann eine Gewichtskraft, die auf die Gefäßaufnahme 2 wirkt, ermitteln, um festzustellen, ob eine Gefäß eingestellt ist. Die Sensorik kann in einem weiteren Ausführungsbeispiel eine optische Sensorik, z. B. eine Lichtschranke, ein optischer Näherungssensor, ein lichtempfindliches Element das eine Abschattung durch das eingestellte Trinkgefäß 3 oder Serviergefäß detektiert etc., sein. Es kann auch ein kapazitiver oder induktiver Näherungssensor als Sensorik in der Gefäßaufnahme 2 zum Einsatz kommen.

Die Gefäßaufnahme 2 weist weiter eine Öffnung 12 auf. Die Abmessungen der Öffnung 12 sind vorzugsweise so bemessen, dass sie dem Trinkgefäß 3 einerseits eine ausreichende Standfestigkeit und andererseits einen größtmöglichen Zugang zum Auffangbehälter 11 zur Verfügung stellt. Die Öffnung 12 ist vorzugsweise so bemessen, dass die zur Standfläche 22 des Trinkgefäßes 3 korrespondierende Auflagefläche 23 der Gefäßaufnahme 2 ein Kippen des Trinkgefäßes 3 in die Öffnung 12 verhindert. Des Weiteren ist die Öffnung 12 so bemessen, dass ein Behältnis zur Aufnahme einer Brühsubstanz 5 ungehindert von einer, im Folgenden näher beschriebenen, Haltevorrichtung 4 in den Auffangbehälter 11 gelangt.

FIG. 2 zeigt in der seitlichen Schnittdarstellung den in das Standelement 15 eingeschobenen Auffangbehälter 11. Dabei ist in dieser Darstellung die Eischuböffnung 20 für den Auffangbehälter an der rechten Seite angeordnet. Der Auffangbehälter 11 ist somit von der rechten Seite in das Standelement 15 der Vorrichtung 1 eingeschoben. Der Auffangbehälter 11 ist in diesem Ausführungsbeispiel wannenförmig ausgebildet und enthält ein Griffelement 26. Die Wanne des Auffangbehälters 11 ist durch einen Boden 24 und eine den Boden 24 umschließende Seitenwand 25 gebildet. Dabei sind der Boden 24 und die Seitenwand 25 wasserdicht miteinander verbunden. In diesem Ausführungsbeispiel ist dazu der Auffangbehälter 11 einstückig ausgeführt.

Die Säule 16 zur Verbindung des Standelements 15 und des Kopfelements 17 ist in diesem Ausführungsbeispiel hohl ausgeführt. Der Übergang zwischen Standelement 15 und Säule 16 weist einen Radius 27 auf. Durch diesen Radius wird die Festigkeit des Übergangs zwischen Standelement 15 und Säule 16 so verbessert, dass die Wände 29 der Säule 16 mit einer geringeren Wandstärke ausgeführt werden können. Dementsprechend ist der Übergang zwischen Kopfelement 17 und Säule 16 mit einem Radius 28 ausgeführt. Die beschrieben Radien 27, 28 erleichtern außerdem ein Reinigen der Vorrichtung 1, da in diesen Bereichen keine Kanten vorhanden sind, an denen sich Verunreinigungen festsetzen können.

Das Kopfelement 17 weist in dem in FIG. 2 dargestellten Ausführungsbeispiel eine Wasserbevorratungseinrichtung 8 und ein Führungselement 18 auf. Das Führungselement 18 besteht aus einem zylindrischen Rohr, das an dessen jeweiligen Ende offen ist. Das Führungselement 18 durchdringt den Boden 32 der Außenhülle des Kopfelements und ist einstückig mit der Außenhülle des Kopfelements 17 ausgeführt.

Die Wasserbevorratungseinrichtung 8 ist im Ausführungsbeispiel durch die Außenhülle 30 des Kopfelements 17 und die der Säule 16 zugewandten Innenwand 31 der Wasserbevorratungseinrichtung 8 begrenzt. Die Wasserbevorratungseinrichtung 8 ist von dem Führungselement 18 durchdrungen. Die Innenwand 31 der Wasserbevorratungseinrichtung 8 ist wasserundurchlässig mit der Außenhülle 30 des Kopfelements 17 verbunden. Durch die einstückige Ausführung der Außenhülle des Kopfelements 30 mit dem Führungselement 18 in Kombination mit der wasserundurchlässig ausgeführten Verbindung der Innenwand 31 der Wasserbevorratungseinrichtung 8 ist die Wasserbevorratungseinrichtung 8 als wasserdichtes nach oben offenes Behältnis ausgeführt. In der Wasserbevorratungseinrichtung 18 kann eine Wasserfiltervorrichtung vorgesehen sein. Die Wasserfiltervorrichtung kann einen Partikelfilter, eine Entkalkungsvorrichtung und/oder eine Wasseraufbereitungseinrichtung enthalten. Die Wasseraufbereitungseinrichtung ist dazu vorgesehen, keimbelastetes Wasser zu reinigen und damit trinkbar zu machen.

Das Kopfelement 17 weist im Ausführungsbeispiel weiter eine Wassereinfülleinrichtung 33 auf. Die Wassereinfülleinrichtung 33 ist an der oberen, offen ausgeführten Seite des Kopfelements 17 vorgesehen. Im Zentrum enthält die Wassereinfülleinrichtung 33 eine Ausnehmung 35, durch die das Führungselement 18 hindurchgeführt ist. Die Kontur der Ausnehmung 35 für das Führungselement 18 ist so gestaltet, dass sie einerseits an dem Führungselement 18 anliegt und andererseits in Richtung des Führungselements 18 widerstandsfrei verschiebbar ist. Die Wassereinfülleinrichtung 33 ist im Ausführungsbeispiel wannenförmig ausgeführt und liegt an ihrem äußeren Rand an der der Außenhülle 30 des Kopfelements 17 so auf, dass sie es nicht in das Kopfelement 17 hineinfallen kann.

In diesem Ausführungsbeispiel der Wassereinfülleinrichtung 33 sind eine Vielzahl von Wassereinfüllöffnungen 34 vorgesehen. Dies Wassereinfüllöffnungen 34 sind im Ausführungsbeispiel als runde Bohrungen vorgesehen. Dabei ist die Form der Wassereinfüllöffnungen 34 nicht auf runde Bohrungen beschränkt. Die Wassereinfüllöffnungen können eine beliebige Kontur wie beispielsweise Rechtecke, Dreiecke, Schriftzüge usw. aufweisen. Die Wassereinfülleinrichtung 33 kann auch durch eine netz- oder siebförmige Struktur mit einer sich daraus ergebenden Form der Wassereinfüllöffnungen 34 gebildet sein.

Das im Kopfelement 17 vorgesehene Führungselement 18 nimmt die Haltevorrichtung 4 in auf-ab-Richtung verschiebbar auf. In diesem Ausführungsbeispiel weist die Halteeinrichtung 4 einen röhrenförmigen Körper 14 auf. An der dem Trinkgefäß 3 zugewandten Öffnung des röhrenförmigen Körpers 14 sind Sperrelemente 6 bewegbar gehalten. Die Wand der Haltevorrichtung 4 enthält an dem dem Trinkgefäß 3 zugewandten Ende Durchströmöffnungen 10. Die Durchströmöffnungen 10 reichen bei einer bis zum Boden des Trinkgefäß 3 eingetauchten Haltevorrichtung 4 bis zum oberen Rand des Trinkgefäßes. Die Durchströmöffnungen 10 sind dabei so ausgelegt, dass in das Trinkgefäß 3 eingefülltes Wasser ein in der Haltevorrichtung gehaltenes Behältnis mit der Brühsubstanz durchströmt werden kann.

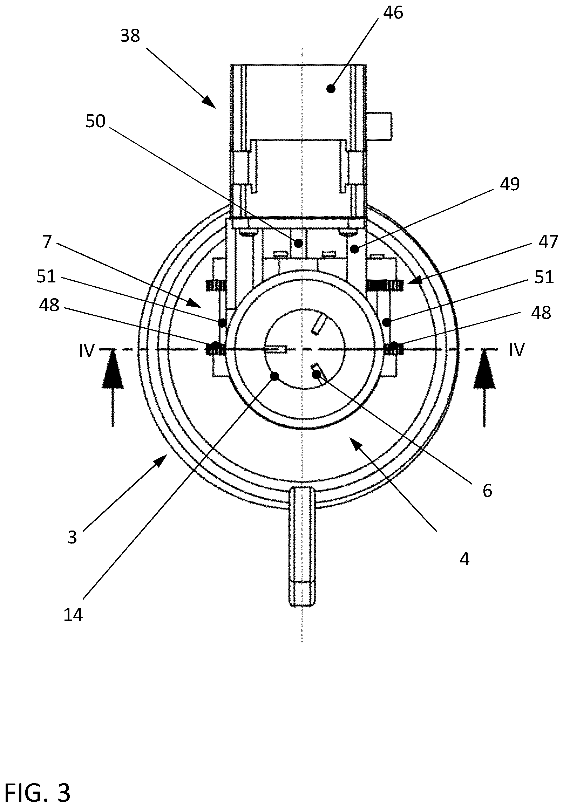

FIG. 3 zeigt eine Draufsicht der Haltevorrichtung 4 mit Verschiebevorrichtung 7 und Trinkgefäß 3 der Vorrichtung zur Zubereitung eines Brühgetränks gemäß einem erfindungsgemäßen Ausführungsbeispiel. Die Haltevorrichtung 4 umfasst einen röhrenförmigen Körper 14. In den röhrenförmigen Körper 14 ragen in diesem Ausführungsbeispiel drei Sperrelemente 6. Diese Sperrelemente sind in einem Winkel von ca. 120° entlang der Umfangsfläche des röhrenförmigen Körpers 14 angeordnet. Die Anzahl der Sperrelemente 6 ist nicht auf drei beschränkt. In weiteren Ausführungsbeispielen kann mindestens ein Sperrelement 6 vorgesehen sein. Die Verteilung der Sperrelemente 6 entlang der Umfangsfläche des röhrenförmigen Körpers 14 ist nicht auf 120° festgelegt. Die Verteilung kann in beliebigen Winkeln erfolgen, wobei jeder Winkel auch unterschiedlich sein kann.

Die Verschiebevorrichtung 7 weist in diesem erfindungsgemäßen Ausführungsbeispiel eine Antriebseinrichtung 38 auf. Die Antriebseinrichtung 38 umfasst einen Elektromotor 46, der dazu ausgelegt ist, aus elektrischer Energie eine Drehbewegung an seiner Motorachse 50 bereitzustellen. Der Elektromotor 46 ist in diesem Ausführungsbeispiel über eine Motorhalterung 51 am Führungselement (hier nicht dargestellt) befestigt. Der Elektromotor 46 kann beispielsweise ein Bürstenmotor, ein bürstenloser Elektromotor, ein Schrittmotor, ein Servomotor etc. sein. Bevorzugt ist ein Schrittmotor oder ein Servomotor vorgesehen. Der Schrittmotor weist mindestens zwei Magnetspulen auf. Eine Drehbewegung der Motorachse 50 des Schrittmotors wird durch eine abwechselnde Versorgung der jeweiligen Magnetspule mit elektrischer Energie in einer vorherbestimmten Sequenz erzeugt. Über diese vorherbestimmte Sequenz ist die Drehrichtung und Winkelposition der Motorachse in festgelegten Winkelschritten vorgebbar. Der alternativ vorgesehene Servomotor ist vorzugsweise so ausgelegt, dass er eine vorgegebene Winkelposition der Motorachse einstellt. Das Einstellen des Winkels der Motorachse kann dabei stufenlos erfolgen.

Die Drehbewegung der Motorachse wird über ein Getriebe 47 auf mindestens eine Antriebsachse 51, in diesem Ausführungsbeispiel zwei Antriebsachsen 51, übertragen. An einem dem Getriebe abgewandten Ende jeder Antriebsachse 51 ist vorzugsweise jeweils ein Antriebsrad 48 vorgesehen. Jedes Antriebsrad 48 ist in diesem Ausführungsbeispiel an der jeweiligen Antriebsachse 51 drehmomentfest befestigt. Sind wie in diesem Ausführungsbeispiel zwei Antriebsräder 48 vorgesehen, ist das Getriebe so ausgelegt, dass die Wirkrichtung der Antriebsräder 48 richtungsgleich auf den röhrenförmigen Körper 14 der Haltevorrichtung wirkt.

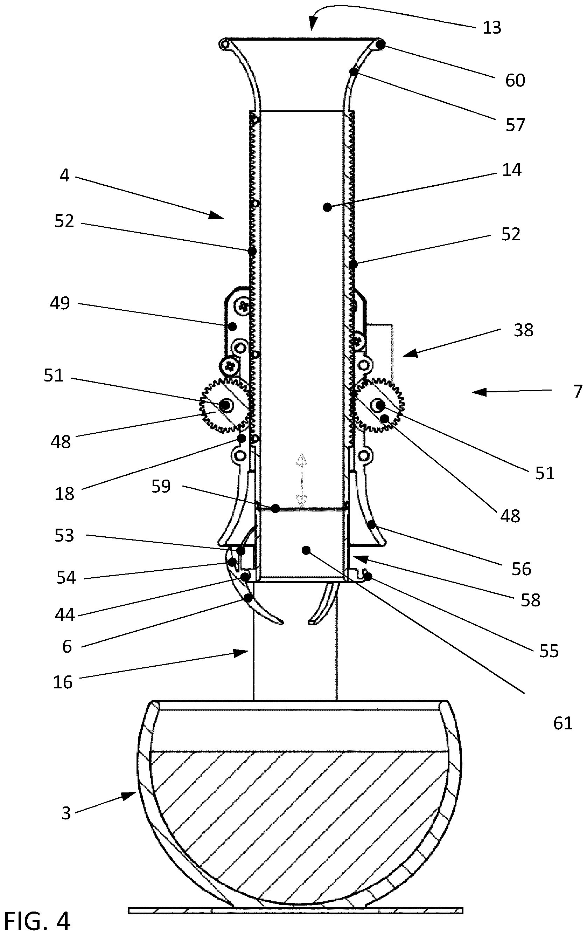

FIG. 4 zeigt eine Schnittdarstellung der Haltevorrichtung 4 mit der Verschiebevorrichtung 7 der Vorrichtung zur Zubereitung eines Brühgetränks gemäß dem erfindungsgemäßen Ausführungsbeispiel. Wie bereits zu FIG. 3 beschrieben, weist die Verschiebeeinrichtung 7 in diesem Ausführungsbeispiel eine Antriebseinrichtung 38 mit einem Elektromotor auf. Die durch den Elektromotor 49 erzeugte Rotationsbewegung wird, wie bereits beschrieben, über die Antriebsachsen 51 auf die Antriebsräder 48 übertragen. In diesem Ausführungsbeispiel sind die Antriebsräder 48 als Zahnräder ausgeführt. In weiteren Ausführungsformen können die Antriebsräder 48 auch als Reibräder oder als Riemenscheiben in Verbindung mit einem Antriebsriemen etc. ausgeführt sein.

Die an den Antriebsrädern 48 vorliegende Rotationsbewegung wird durch Zahnstangen 52 in eine lineare Bewegung umgewandelt. In diesem Ausführungsbeispiel sind vorzugsweise zwei Zahnstangen 52 korrespondierend zur Anzahl der Antriebsräder 48 vorgesehen. Die Zahnstangen 52 sind an gegenüberliegenden Seiten der Haltevorrichtung 4 vorgesehen. Die Zahnstangen 52 können integraler Bestandteil des röhrenförmigen Körpers 14 oder an dem röhrenförmigen Körper 14 befestigte Elemente sein. Die Positionierung und Anzahl der Zahnstangen 52 ist in weiteren Ausführungsbeispielen entsprechend der Position und Anzahl der Antriebsräder 48 angepasst. Die Zahnstangen 52 sind so ausgelegt, dass die Zähne der Antriebsräder 48 in die Zähne der Zahnstangen 52 eingreifen. Für das Ausführungsbeispiel mit den Reibrädern können Reibflächen an Stelle der Zahnstangen 52 vorgesehen sein.

Die Haltevorrichtung 4 weist an ihrem oberen Ende im Bereich der Einführöffnung 13 vorzugsweise einen Einführtrichter 57 auf. So wird das kraftfreie Einführen des Behältnisses für eine Brühsubstanz in die Einführungsöffnung 13 erleichtert. Der Einführtrichter 57 weist auf seiner der Einführungsöffnung zugewandten Seite vorzugsweise einen Wulst 60 auf. Dieser Wulst 60 ist dazu vorgesehen, die Kante des Einführtrichters 57 mechanisch zu stabilisieren. Außerdem wird durch den abgerundet ausgeführten Wulst 60 ein Verletzungsrisiko durch eine Kante des Einfülltrichters 57 minimiert.

Der röhrenförmige Körper 14 weist an seinem dem Einführtrichter 57 gegenüberliegenden Ende in diesem Ausführungsbeispiel ein Verbindungselement 59 auf. Das Verbindungselement 59 ist dazu vorgesehen, einen röhrenförmigen Sperrelementkörper 61 einer Sperrelementeinheit 58 rastend aufzunehmen. Der röhrenförmigen Sperrelementkörper 61 der Sperrelementeinheit 58 kann auch mit dem röhrenförmigen Körper 14 einstückig ausgeführt sein.

An dem dem Verbindungselement 59 gegenüberliegenden Ende der Sperrelementeinheit 58 sind in einem Winkel von vorzugsweise ca. 120° angeordnete Sperrelemente 6 vorgesehen. Jedes dieser Sperrelemente 6 ist in diesem Ausführungsbeispiel ein sichelförmig ausgebildetes Sperrelement 6. Die Sperrelemente 6 sind vorzugsweise federnd mit dem röhrenförmigen Sperrelementkörper 61 der Haltevorrichtung 4 verbunden.

Die Sperrelemente 6 sind in diesem Ausführungsbeispiel jeweils über ein Gelenk 44 beweglich über eine Gelenkaufhängung 55 an der Sperrelementeinheit 58 befestigt. Für die Gelenkaufhängungen 55 sind an der äußeren Umfangsfläche röhrenförmigen Sperrelementkörper 61 in radialer Richtung erstreckend vorgesehen.

Die Sperrelemente 6 weisen jeweils ein Federelement 53 auf, das sich an seinem freien Ende am röhrenförmigen Sperrelementkörper 61 abstützt. Durch dieses federnde Abstützen wird das jeweilige Sperrelement 6 in seine vorgesehene Grundposition eingestellt. Außerdem weisen die Sperrelemente 6 in diesem Ausführungsbeispiel jeweils einen Betätigungshebel 54 auf. Dieser Betätigungshebel 54 ist dazu ausgelegt, durch einen am Führungselement 18 vorgesehenen Betätigungstrichter 56 in radialer Richtung zum Sperrelementkörper 61 bewegt zu werden. Diese radiale Bewegung wird in diesem Ausführungsbeispiel durch ein nach oben Bewegen des Haltelements 14 erzeugt, wobei die Betätigungshebel 54 durch den sich verengenden Durchmesser des Betätigungstrichters 56 radial zusammengedrückt werden.

In dem Grundzustand befinden sich die Sperrelemente 6 in einer Halteposition. Die Betätigungshebel 54 der Sperrelemente 6 stehen nicht im Kontakt zum Betätigungstrichter 56. Die Öffnung an einem unteren Ende der Sperrelementeinheit 58 und somit der Haltevorrichtung 4 ist so verengt, dass die verbleibende Öffnung kleiner ist als die Dimension des Behältnisses mit der Brühsubstanz. Um ein Ausstoßen des Behältnisses zur Aufnahme einer Brühsubstanz zu ermöglich, werden die Sperrelemente 6 gegen die Federkraft der Federelemente 53 in eine Freigabeposition gebracht. Um dies zu erreichen, wird die Halteeinrichtung 4 in diesem Ausführungsbeispiel nach oben in eine Freigabeposition verschoben. Dabei werden die Betätigungshebel 54 der Sperrelemente 6 durch den Betätigungstrichter 56 in Richtung Außenwand röhrenförmigen Sperrelementkörper 61 gedrückt. Die Halteeinrichtung 4 in diesem Ausführungsbeispiel wird dabei soweit verschoben, bis die Betätigungshebel 54 der Sperrelemente 6 vorzugsweise vollständig am röhrenförmigen Sperrelementkörper 61 anliegen. Dabei wird die Öffnung an einem unteren Ende der Haltevorrichtung 4 mit den Sperrelementen 6 so geöffnet, dass die durch die Sperrelemente 6 gebildete Öffnung größer oder gleich der Dimension des Behältnisses 5 mit der Brühsubstanz ist.

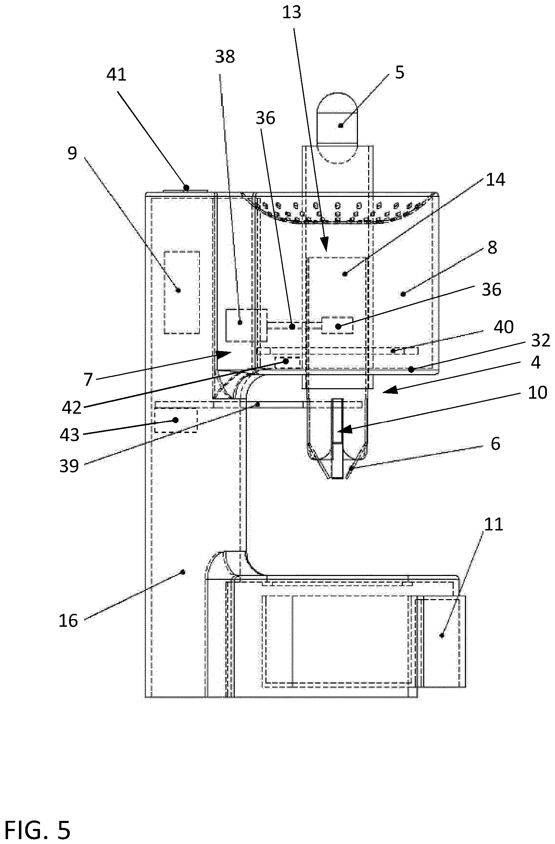

FIG. 5 zeigt ein Ausführungsbeispiel der erfindungsgemäßen Vorrichtung 1 mit internen Komponenten. Die Elemente der Vorrichtung in FIG. 5 mit denselben Referenznummern entsprechen den zu FIG. 2 beschriebenen Elementen. Die Vorrichtung 1 zur Zubereitung eines Brühgetränks weist weiter eine Verschiebeeinrichtung 7 auf. Die Verschiebeeinrichtung 7 ist für ein auf- und ab Bewegen der Haltevorrichtung 4 vorgesehen. In diesem Ausführungsbeispiel ist die Verschiebeeinrichtung innerhalb der Wasserbevorratungseinrichtung 8 angebracht. Die Verschiebeeinrichtung 7 ist wasserfest ausgeführt, so dass das in dem Wasserbevorratungseinrichtung 8 befindliche Wasser die Funktion nicht beeinträchtigt.

Die Verschiebeeinrichtung 7 weist einen Antrieb 38 auf. Dieser Antrieb 38 ist in diesem Ausführungsbeispiel über eine Antriebsachse 36 mit einem Koppelelement 39 verbunden. Die Antriebsachse 36 ist über ein Dichtelement im Bereich des Führungselements 18 wasserdicht aus der Wasserbevorratungseinrichtung 8 herausgeführt (in FIG. 5 nicht dargestellt).

Das Koppelement 39 ist beispielsweise ein Reibrad, das mit einer Außenwand des röhrenförmigen Körpers 14 der Haltevorrichtung 4 in Kontakt ist. Das Reibrad liegt so an dem röhrenförmigen Körper 14 an, dass eine Reibkraft erzeugt wird. Die Reibkraft ist so ausgelegt, dass der röhrenförmige Körper 14 in einem statischen Zustand in seiner Position gehalten wird. Außerdem ist die Reibkraft weiter so ausgelegt, dass eine Bewegung des Koppelelements 39 nahezu schlupffrei auf den röhrenförmigen Körper 14 übertragen wird. Die Ausführung des Koppelelements 39 ist nicht auf ein Reibrad beschränkt. Als Koppelelement 36 kommen auch magnetische Koppeleinrichtungen in Betracht, bei welchen auf der Antriebsachse ein drehbarer Magnet angebracht ist und die Halteeinrichtung 4 ein korrespondierendes Magnetband oder eine Aneinanderreihung einer Mehrzahl von Magneten in Längsrichtung mit jeweils entgegengesetzter Polung der jeweils benachbarten Magnete aufweist.

Die Verschiebeeinrichtung 7 kann beispielsweise auch ein mehrphasiger Linearantrieb sein. In einem Ausführungsbeispiel zu einem mehrphasigen Linearantrieb sind außen um das Führungselement 18 mehrere Magnetspulen in Längsrichtung nebeneinander angeordnet. Des Weiteren ist bei einer Aneinanderreihung einer Mehrzahl von Magneten entlang des röhrenförmigen Körpers ein Linearantrieb der Haltevorrichtung 4 vorgesehen. Die Magnete wiesen einen Abstand entsprechend einem Abstand der Magnetspulen auf und sind jeweils entgegengesetzt gepolt. Zur Durchführung einer linearen Bewegung werden die Magnetspulen durch Anlegen eines Stroms erregt. Dabei werden die Magnetspulen entsprechend der vorgesehene Bewegung in ihrer Polung kommutiert.

Ein weiteres Beispiel eines Antriebs 38 für eine Verschiebeeinrichtung 7 ist eine spindelgetriebener Linearantrieb, bei dem eine Rotation durch eine Spindel in eine Verschiebebewegung umgesetzt wird. Die Verschiebeeinrichtung 7 ist jedoch nicht auf das oben beschrieben Ausführungsbeispiel beschränkt.

In der Wasserbevorratungseinrichtung 8 ist eine Wassererhitzungseinrichtung 40 vorgesehen. In diesem Ausführungsbeispiel ist die Wassererhitzungsvorrichtung 40 als elektrische Heizspirale ausgeführt. Die Wassererhitzungsvorrichtung 40 ist in der Nähe des Bodens 32 der Außenhülle des Kopfelements 17 angebracht. So können auch geringe Wassermengen erhitzt werden. Außerdem wird durch die tiefe Anbringung die durch die Erwärmung des Wassers entstehende Wasserbewegung zur Durchmischung und damit zur gleichmäßigen Wärmeverteilung im Wasser genutzt.

An der Wasserbevorratungseinrichtung 8 ist eine Pump- oder Ablasseinrichtung 42 vorgesehen. Die Ablasseinrichtung ist ein steuerbares Ventil. Mit der Pumpeinrichtung 42 wird das bevorratete Wasser in das Trinkgefäß gepumpt. Alternativ kann das Wasser durch das steuerbare Ventil in das Trinkgefäß abgelassen werden.

Das Ausführungsbeispiel der Vorrichtung 1, wie sie in FIG. 5 dargestellt ist, weist einen Abstreifer 39 auf. Der Abstreifer 39 ist zum Ausstoßen des Behältnisses 5 zur Aufnahme einer Brühsubstanz aus der Haltevorrichtung 4 vorgesehen. Dieser Abstreifer 39 ist horizontal verschiebbar. Das Verschieben erfolgt durch eine Abstreiferantriebseinrichtung 43. Die Funktion des Abstreifers 39 wird später detailliert beschreiben.

In dem in FIG. 5 dargestellten Ausführungsbeispiel ist das Behältnis 5 zur Aufnahme einer Brühsubstanz beim Einführen in die Haltevorrichtung 4 dargestellt. Um das Einführen zu ermöglichen, weist die Haltevorrichtung 4 an ihrem oberen Ende eine Einführöffnung 13 auf. Die Einführungsöffnung 13 ist so ausgelegt, dass das Behältnis 5 kraftfrei in die Haltevorrichtung 4 eingeführt werden kann. Die Haltevorrichtung 4 ist weiter so ausgelegt, dass das Behältnis 5 mit der Brühsubstanz bis zu dem Sperrelement 6 weiter gleiten kann. Um ein Herausgleiten des Behältnisses zu vermeiden, ist die Öffnung am unteren Ende der Haltevorrichtung 4 durch das Sperrelement 6 in einer Halteposition so verengt, dass die verbleibende Öffnung kleiner ist als die Dimension des Behältnisses 5 mit der Brühsubstanz.

In der Säule 16 ist in diesem Ausführungsbeispiel eine Steuerung 9 vorgesehen. Diese Steuerung 9 ist bevorzugt eine elektronische Steuerung und besonders bevorzugt eine Steuerung mit einem Microcontroller, die alle für die Bereitung eines Brühgetränks notwendigen Verfahrensschritte der Vorrichtung steuert. Zur Vorwahl der verschiedenen Funktionen des Brühens wie beispielsweise Start, Stopp, Brühdauer, Brühtemperatur, Füllmenge und Brühweise sind im Ausführungsbeispiel im Kopfelement 17 Bedienelemente 41 vorgesehen. Diese Bedienelemente 41 sind mit der Steuerung 9 verbunden. Die Steuerung 9 ist auch mit der Verschiebeeinrichtung 7 verbunden. Die Steuerung 9 steuert die Bewegung der Verschiebeeinrichtung 7, indem sie einen geeigneten Strom an die Verschiebeeinrichtung 7 leitet. Die Energieversorgung des Heizelements 40 wird durch die Steuerung 9 so gesteuert, dass das Wasser entsprechend des ausgewählten Brühvorgangs erhitzt wird. Zur Steuerung der Funktion des Abstreifers 39 ist die Steuerung 9 elektrisch mit der Abstreifer-Antriebseinrichtung verbunden. Außerdem ist die Sensorik zum Festzustellen, ob sich ein Trink- oder Serviergefäß auf der Gefäßaufnahme 2 befindet, mit der Steuerung 9 verbunden.

Das Behältnis 5 zur Aufnahme einer Brühsubstanz weist im Ausführungsbeispiel eine Hülle auf, die die Brühsubstanz umgibt. Dabei ist die Hülle so geformt, dass keine festen Bestandteile der Brühsubstanz diese durchdringen können. Wasser kann jedoch die Hülle durchdringen und in Kontakt mit der Brühsubstanz kommen. Die Hülle ist weiter so ausgelegt, dass Wasser, insbesondere Wasser, das die löslichen Inhaltsstoffe aufgenommen hat, die Hülle nach außen durchdringen kann. So findet ein ständiger Wasseraustausch statt, der die Inhaltsstoffe aus dem Behältnis 5 heraus transportiert. Die Hülle kann ein allseits geschlossener Zellulosebeutel wie beispielsweisen ein Teebeutel, ein Sachet, ein Metallkörper mit Filteröffnungen oder eine Gitterstruktur aus Metall oder Kunststoff sein.

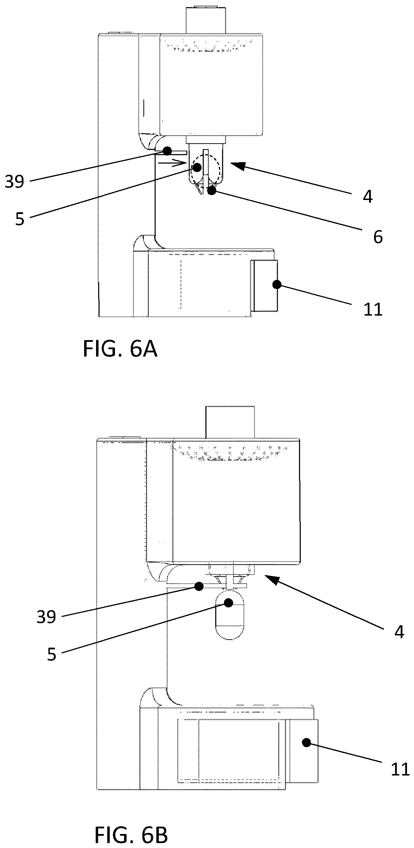

FIG. 6A und FIG. 6B zeigen in einem Ausführungsbespiel die Funktion das Abstreifers 39. In FIG. 6A ist die Haltevorrichtung 4 in einer Startposition zum Auswerfen des Behälters 5 zur Aufnahme einer Brühsubstanz eingestellt. Dabei ist das obere Ende einer dem Abstreifer 39 zugewandten Durchströmöffnung 10 so angeordnet, dass der Abstreifer 39 in die Haltevorrichtung 4 eingeschoben werden kann. Die Startposition der Haltevorrichtung 4 ist weiter so vorgesehen, dass der Abstreifer 39 über dem Behältnis 5 zur Aufnahme einer Brühsubstanz, die in der Haltevorrichtung 4 gehalten ist, in die Haltevorrichtung 4 eingreifen kann.

Ist die in FIG. 6A gezeigte Startposition der Haltevorrichtung 4 eingestellt, wird der Abstreifer 39 horizontal so verschoben, dass er radial in die Haltevorrichtung 4 über die Durchströmöffnung 10 ragt. Der Abstreifer 39 wird so in die Haltevorrichtung 4 eingeschoben, dass er über die Hälfte der inneren Abmessung der Haltevorrichtung 4 eingeschoben ist.

Die Haltevorrichtung 4 wird ausgehend von der Startposition zum Auswerfen nach oben bewegt. Durch diese Bewegung wird eine Kraft auf das Behältnis 5 zur Aufnahme einer Brühsubstanz ausgeübt. Diese Kraft wirkt zusätzlich zur Gewichtskraft des Behältnisses 5 zur Aufnahme einer Brühsubstanz auf die Sperrelemente 6. Durch ein Weitebewegen der Haltevorrichtung 4 wird die Kraft auf die Sperrelemente 6 soweit erhöht, dass die Haltekraft der Sperrelemente 6 überwunden wird. Durch das Überwinden der Haltekraft der Sperrelemente 6 öffnen sich die Sperrelemente 6 automatisch.

In FIG. 6B ist gezeigt, wie durch das Öffnen der Sperrelemente 6 das Behältnis 5 zur Aufnahme einer Brühsubstanz aus der Haltevorrichtung 4 freigegeben wird. Das freigegebene Behältnis 5 fällt durch die Öffnung 12 in der Gefäßaufnahme in den Auffangbehälter 11. Um die Vorrichtung 1 zum Zubereiten eines Brühgetränks wieder in einen betriebsbereiten Zustand zu versetzen, wird der Abstreifer 39 in seine Grundposition bewegt. Das bedeutet, dass der Abstreifer 39 aus der Haltevorrichtung 4 herausgezogen ist. Nun ist der Vorgang des Auswerfens des Behältnisses 5 zur Aufnahme der Brühsubstanz abgeschlossen.

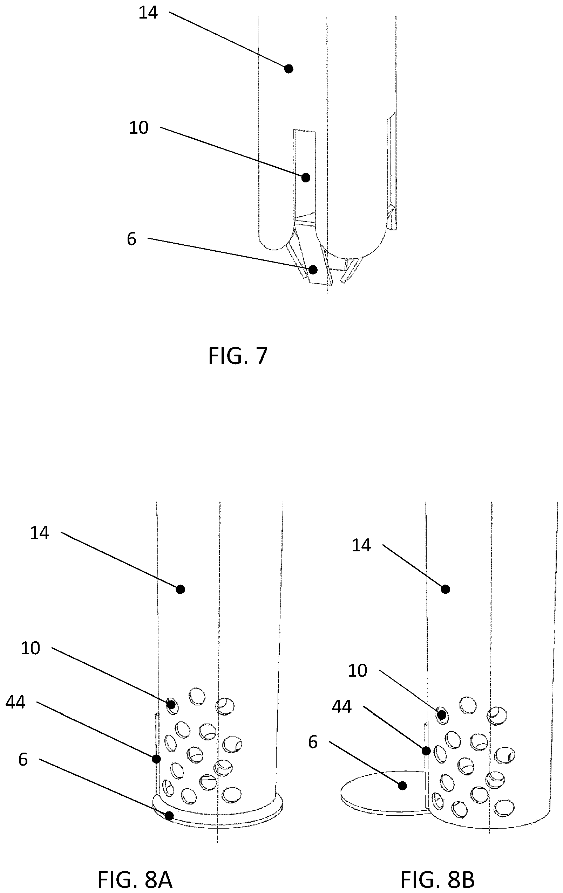

FIG. 7 zeigt ein Ausführungsbeispiel einer Halteeinrichtung 4 mit schlitzförmigen Durchströmöffnungen 10. Das untere Ende des röhrenförmigen Körpers 14 enthält in einem Winkel von ca. 90° angeordnete Schlitze, die als Durchströmöffnungen 10 vorgesehen sind. In jedem der Schlitze ist je ein Sperrelement 6 vorgesehen. Jedes dieser Sperrelemente 6 ist ein rechteckiges flaches Element. Die Sperrelemente 6 sind federnd mit dem röhrenförmigen Körper 14 der Haltevorrichtung 14 verbunden. In einem Grundzustand befinden sich die Sperrelemente 6 in einer Halteposition. Dabei ist die Öffnung an einem unteren Ende der Haltevorrichtung 4 so verengt, dass die verbleibende Öffnung kleiner ist als die Dimension des Behältnisses 5 mit der Brühsubstanz. Um ein Ausstoßen des Behältnisses zur Aufnahme einer Brühsubstanz zu ermöglich, werden die Sperrelemente 6 gegen die Federkarft der federnden Aufhängung in eine Freigabeposition gebracht. Dabei wird die Öffnung an einem unteren Ende der Haltevorrichtung 4 mit den Sperrelementen 6 so bewegt, dass die durch die Sperrelemente 6 gebildete Öffnung größer oder gleich der Dimension des Behältnisses 5 mit der Brühsubstanz ist.

FIG. 8A und FIG. 8B zeigen ein Ausführungsbeispiel einer Halteeinrichtung 4 mit einem drehbaren Sperrelement 6. Das untere Ende des röhrenförmigen Körpers 14 der Halteeinrichtung 4 enthält eine Vielzahl von Löchern, die als Durchströmöffnungen 10 vorgesehen sind. Die Löcher sind so bemessen, dass durch sie das in der Haltevorrichtung 4 gehaltene Behältnis 5 zur Aufnahme einer Brühsubstanz heraustreten kann. Das Sperrelement 6 ist scheibenförmig ausgeführt. Die Größe des Sperrelements ist dabei so ausgelegt, dass die untere Öffnung der Halteeinrichtung 4 vollständig verschlossen ist. Ein Gelenk 44 verbindet das Sperrelement 6 mit dem röhrenförmigen Körper 14 der Haltevorrichtung 4. Ein an dem röhrenförmigen Körper 14 vorgesehener Teil des Gelenks 44 ist parallel zur einer Längsausrichtung dieses röhrenförmigen Körpers 14 ausgerichtet. Ein an dem Sperrelement 6 vorgesehener Teil des Gelenks ist senkrecht zu einer flächigen Ausdehnung des Sperrelements 6 in dessen Randbereich angeordnet. Dadurch ist das Sperrelement 6 schwenkbar gelagert.

In einem in FIG. 8A dargestellten Grundzustand befinden sich das Sperrelement 6 in einer Halteposition. Dabei ist das Sperrelement vor die Öffnung an einem unteren Ende der Haltevorrichtung 4 geschwenkt, so dass die Öffnung des röhrenförmigen Körpers 14 verschlossen ist. Um ein Ausstoßen des Behältnisses zur Aufnahme einer Brühsubstanz zu ermöglich, wird das Sperrelement 6 von der Öffnung des röhrenförmigen Körpers 14, wie in FIG. 8B dargestellt, weg geschwenkt und damit in eine Freigabeposition gebracht. So kann das Behältnis 5 zur Aufnahme der Brühsubstanz einfach aus der Haltevorrichtung 4 herausgleiten. Das Sperrelement 6 kann durch Verschieben des Abstreifers 39 geschwenkt werden. Es ist aber auch möglich, eine Brühsubstanz auch ohne Behältnis 5 zur Aufnahme einer Brühsubstanz in dieser Haltevorrichtung 4 zu halten.

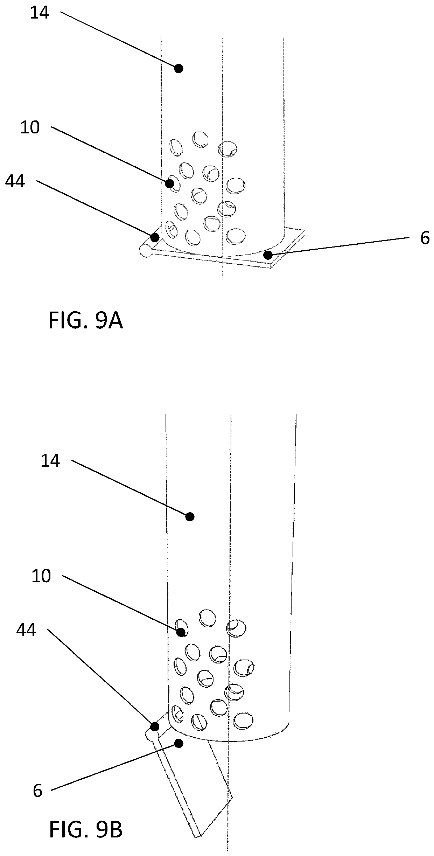

FIG. 9A und FIG. 9B zeigen ein Ausführungsbeispiel einer Halteeinrichtung 4 mit einem klappbaren Sperrelement 6. Der röhrenförmigen Körper 14 der Halteeinrichtung 4 enthält in dem zum Halten des Behältnisses 5 zur Aufnahme einer Brühsubstanz vorgesehenen Bereich eine Vielzahl von Löchern. Diese Löcher sind als Durchströmöffnungen 10 vorgesehen. Die Löcher sind so bemessen, dass durch sie das in der Haltevorrichtung 4 gehaltene Behältnis 5 zur Aufnahme einer Brühsubstanz heraustreten kann. Das Sperrelement 6 ist flächig ausgeführt. Das Sperrelement 6 ist so ausgelegt, dass die untere Öffnung der Halteeinrichtung 4 vollständig verschlossen ist. Ein Gelenk 44 verbindet das Sperrelement 6 mit dem röhrenförmigen Körper 14 der Haltevorrichtung 4.

Ein an dem röhrenförmigen Körper 14 vorgesehener Teil des Gelenks 44 ist im Ausführungsbeispiel am Rand der Öffnung des röhrenförmigen Körper 14 angebracht. Dabei ist dieser Teil des Gelenks 44 parallel zu der Öffnung angeordnet. Ein an dem Sperrelement 6 vorgesehener Teil des Gelenks ist am Rand parallel zur flächigen Ausdehnung des Sperrelements 6 angeordnet. Dadurch ist das Sperrelement 6 nach unten abklappbar gelagert. Das Gelenk 44 enthält ein Federelement. Durch dieses Sperrelement 6 ist es möglich, eine Brühsubstanz auch ohne Behältnis 5 zur Aufnahme einer Brühsubstanz in dieser Haltevorrichtung 4 zu halten.

In einem in FIG. 9A dargestellten Grundzustand befindet sich das Sperrelement 6 in einer Halteposition. Dabei wird das Sperrelement 6 durch das Federelement des Gelenks 44 in der Halteposition gehalten. Zum Ausstoßen des Behältnisses 5 zur Aufnahme einer Brühsubstanz wird das Sperrelement 6 von der Öffnung des röhrenförmigen Körpers 14 um das Gelenk 44 wegeklappt, wie in FIG. 9B dargestellt. Durch das Wegklappen wird das Sperrelement 6 in die Freigabeposition gebracht. So kann das Behältnis 5 zur Aufnahme der Brühsubstanz einfach aus der Haltevorrichtung 4 herausgleiten. Das Sperrelement 6 wird mit Hilfe des Abstreifers 5 in die Freigabeposition geklappt. Die Halteeinrichtung 4 mit den Durchströmöffnungen 10 und die Sperrelemente 6 dabei sind nicht auf die oben beschrieben Ausführungsbeispiele beschränkt.

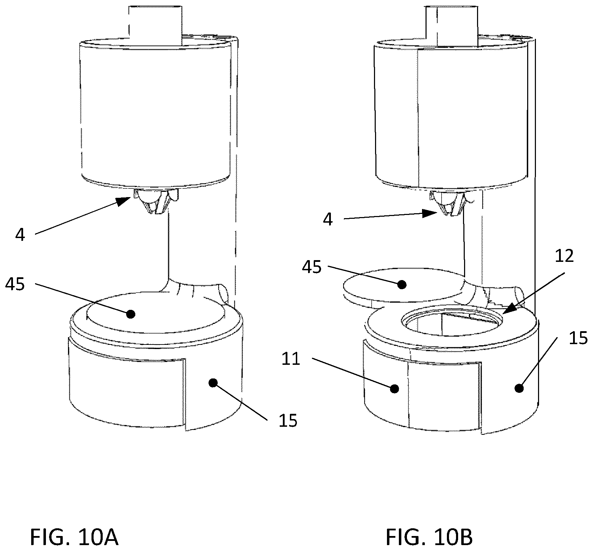

FIG. 10A und FIG. 10B zeigen eine erfindungsgemäße Ausführungsform der Vorrichtung 1 mit verschließbarer Öffnung in der Gefäßaufnahme. Die Vorrichtung 1 zur Herstellung eines Brühgetränks weist an dem Standelement 15 eine Abdeckung 45 zum Verschließen der Öffnung im Standelement 15 auf. In FIG. 10A ist die Vorrichtung mit einer durch die Abdeckung 45 verschlossenen Öffnung des Standelements 15 gezeigt. In diesem Ausführungsbeispiel dient die Abdeckung 45 auch als Gefäßaufnahme. Die Abdeckung 45 ist an ihrer oberen Seite als ebene Fläche ausgeführt. So ist die Abdeckung 45 geeignet, Trink- und Serviergefäße in beliebiger Form und Größe aufzunehmen, die ein plane Standfläche enthalten. Die Abdeckung 45 kann ein Heizelement zum Warmhalten des in dem geeigneten Trink- bzw. Serviergefäß eingefüllten Brühgetränks aufweisen.

FIG. 10B zeigt die Vorrichtung mit einer weggeschwenkten Abdeckung 45. Durch das Wegschwenken der Abdeckung 45 ist die Öffnung 12 des Standelements 15 frei. Zum Schwenken ist im Bereich der Säule 16 ein Schwenkgelenk vorgesehen. Zum automatischen Ausführen des Wegschwenkens kann in der Säule 16 eine Schwenkantriebseinheit vorgesehen sein. In dem geöffneten Zustand der Öffnung 12 kann ein Behältnis 5 zur Aufnahme einer Brühsubstanz, das aus der Haltevorrichtung 4 ausgeworfen wird, ungehindert in dem Auffangbehälter 11 aufgenommen werden. Die Abdeckung 45 kann auch eine klappbare Abdeckung sein, die an der Säule 16 gelagert ist und in Richtung der Säule 16 aufgeklappt werden kann.

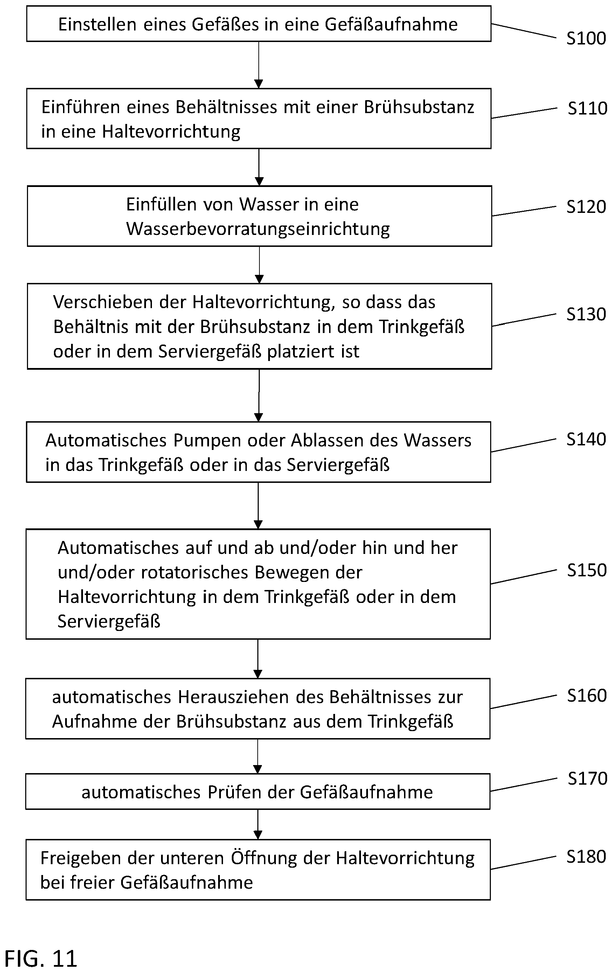

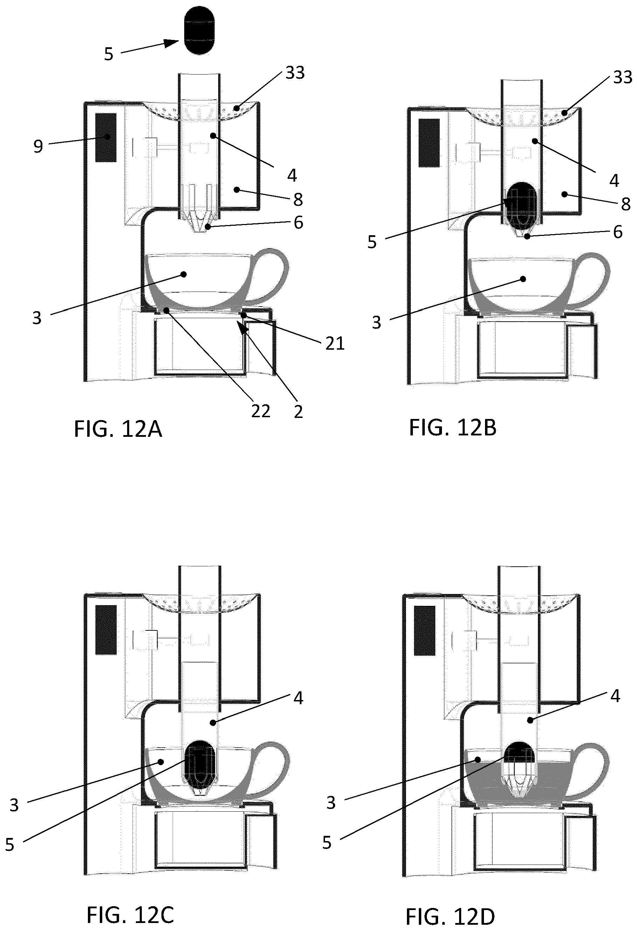

FIG. 11 zeigt ein Flussdiagramm zu einem erfindungsgemäßen Ausführungsbeispiel eines Verfahrens zur automatischen Zubereitung eines Brühgetränks. Die verschiedenen Verfahrensschritte werden durch FIG. 12A - FIG. 12H zusätzlich erläutert. Das Verfahren ist bevorzugt vorgesehen, um mit einer Vorrichtung zur automatischen Zubereitung eines Brühgetränks durchgeführt zu werden.

In einem ersten Schritt S100 wird ein Gefäß in Form eines Trinkgefäßes 3 oder eines Serviergefäßes in eine Gefäßaufnahme 2 der Vorrichtung eingestellt. Dabei wird das Gefäß so in die Gefäßaufnahme gestellt, dass die Standfläche 22 des Gefäßes in der Einsenkung 21 der Gefäßaufnahme 2 platziert ist.

Nun erfolgt im Schritt S110 ein Einführen eines Behältnisses 5 mit einer Brühsubstanz, insbesondere Tee, in eine Haltvorrichtung 4 (FIG. 12A). Dieser Vorgang kann manuell durch den Benutzer erfolgen. Alternativ kann das Einführen des Behältnisses mit einer Brühsubstanz in die Haltevorrichtung 4 automatisch erfolgen. Das automatische Einführen des Behältnisses 5 mit einer Brühsubstanz erfolgt dabei durch eine Zuführeinrichtung für Behältnisse 5 mit einer Brühsubstanz. Das Behältnis 5 mit einer Brühsubstanz gleitet in diesem Verfahrensschritt in der Haltevorrichtung 4 bis zu den Sperrelementen 6 (FIG. 12B). Durch die Sperrelemente 6 wird ein Herausrutschen des Behältnisses mit einer Brühsubstanz aus der Haltevorrichtung 4 verhindert.

In einem weiteren Schritt S120 erfolgt ein Einfüllen von Wasser in eine Wasserbevorratungseinrichtung 8. Dabei wird das Wasser über die Wassereinfülleinrichtung 33 in die Wasserbevorratungseinrichtung 8 durch den Benutzer eingefüllt. In einem weiteren Ausführungsbeispiel kann das Einfüllen des Wassers auch automatisch erfolgen. Dazu ist in der Vorrichtung eine Verbindung zu einem Wassernetz vorgesehen. Der Wasserfluss wird über ein durch die Steuerung 9 betätigtes Ventil gesteuert.

Ein Verschieben der Haltevorrichtung 4 erfolgt in einem weiteren Schritt S130. Dabei wird die Haltevorrichtung 4 so verschoben, dass das Behältnis mit der Brühsubstanz 5 in dem Trinkgefäß 3 oder in dem Serviergefäß platziert ist. Die Haltevorrichtung 4 ist dabei soweit in das Trinkgefäß 3 oder das Serviergefäß geschoben, dass sie nahezu mit dem Trinkgefäß 3 oder eines Serviergefäß in Kontakt kommt (FIG. 12C).

Nun erfolgt im Schritt S140 ein automatisches Pumpen oder Ablassen des Wassers in das Trinkgefäß 3 oder das Serviergefäß (FIG. 12D). Dabei wird das Wasser durch die Pumpe aus der Wasserbevorratungseinrichtung abgesaugt in das Trinkgefäß 3 oder das Serviergefäß gepumpt. Beim Ablassen wird ein Ventil geöffnet, das hydraulisch mit der Wasserbevorratungseinrichtung in Verbindung ist. Mit Hilfe der Schwerkraft fließt das Wasser in das Trink- bzw. Serviergefäß. Der Schritt des Pumpens oder Ablassens des Wassers kann zusammen mit einem Schritt des Erhitzens des Wassers durch eine Wassererhitzungseinrichtung erfolgen.

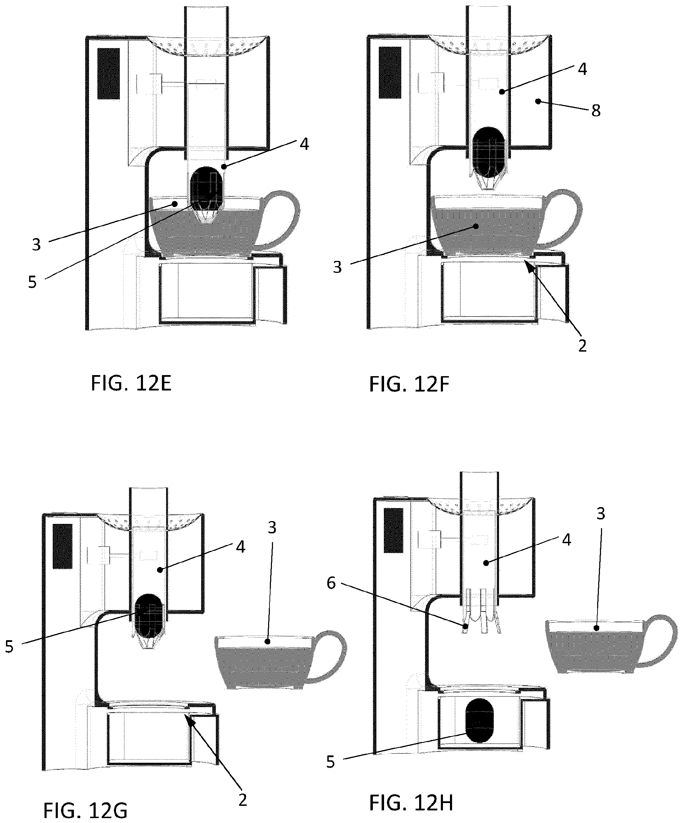

In einem nächsten Schritt S150 erfolgt ein automatisches auf und ab und/oder hin und her und/oder rotatorisches Bewegen der Haltevorrichtung 4 in dem Trinkgefäß 3 oder dem Serviergefäß (FIG. 12E). Durch diese Bewegungen werden besonders effektiv die gewünschten Stoffe aus der Brühsubstanz herausgelöst.

Es folgt im Schritt S160 ein automatisches Herausziehen des Behältnisses 5 zur Aufnahme der Brühsubstanz aus dem Trinkgefäß 3 oder dem Serviergefäß (FIG. 12F) nach einer vorgegebenen Zeit.

Nach dem Schritt S160 des Herausziehens des Behältnisses 5 zur Aufnahme der Brühsubstanz kann im Schritt S170 ein automatisches Prüfen der Gefäßaufnahme 2 erfolgen. Dabei wird ermittelt, ob ein Trinkgefäß 3 oder das Serviergefäß auf der Gefäßaufnahme 2 vorhanden ist. Wenn das Trinkgefäß 3 oder das Serviergefäß entnommen ist (FIG 12G), erfolgt im Schritt S180 ein Freigeben der unteren Öffnung der Haltevorrichtung 4 durch Bewegen eines Sperrelements 6 der Halteeinrichtung 4 in eine Freigabeposition (FIG. 12H).

Die Erfindung ist nicht auf das dargestellte Ausführungsbeispiel beschränkt. Beispielsweise kann anstatt von Wasser auch eine andere wässrige oder auch z.B. ölige Flüssigkeit, insbesondere einer wässrigen Emulsion, eine wässrige Lösung mit einem Farbstoff oder einem Geschmacksverstärker zum Einsatz kommen. Die Begriffe "Wasser", "Wasserbevorratungseinrichtung" usw. sind im Rahmen dieser Anmeldung daher sehr breit zu verstehen. Alle vorstehend beschriebenen Merkmale oder in den Figuren gezeigten Merkmale oder in den Ansprüchen beanspruchten Merkmale sind im Rahmen der Erfindung beliebig vorteilhaft miteinander kombinierbar.

## Patentansprüche

1. Ein Verfahren zur automatischen Zubereitung eines Brühgetränks, mit folgenden Schritten:
Einstellen eines Trinkgefäßes (3) oder eines Serviergefäßes in eine Gefäßaufnahme (2),
Einführen eines Behältnisses (5) mit einer Brühsubstanz, insbesondere Tee, in eine Haltevorrichtung (4) Einfüllen von Wasser in eine Wasserbevorratungseinrichtung (8),
Verschieben der Haltevorrichtung (4), so dass das Behältnis (5) mit der Brühsubstanz in dem Trinkgefäß (3) oder in dem Serviergefäß platziert ist,
Automatisches Pumpen oder Ablassen des Wassers in das Trinkgefäß (3) oder in das Serviergefäß,
automatisches auf und ab und/oder hin und her und/oder rotatorisches Bewegen der Haltevorrichtung (4) in dem Trinkgefäß (3) oder dem Serviergefäß, und
automatisches Herausziehen des Behältnisses (5) zur Aufnahme der Brühsubstanz aus dem Trinkgefäß (3) oder dem Serviergefäß nach einer vorgegebenen Zeit,
**dadurch gekennzeichnet,**
**dass** nach dem Schritt des Herausziehens das Verfahren folgende Schritte aufweist:
automatisches Prüfen der Gefäßaufnahme (2), ob das Trinkgefäß (3) oder das Serviergefäß vorhanden ist, und
wenn das Trinkgefäß (3) oder das Serviergefäß entnommen ist, Freigeben
der unteren Öffnung der Haltevorrichtung (4) durch Bewegen eines Sperrelements (6) der Haltevorrichtung (4) in eine Freigabeposition.

2. Das Verfahren nach Anspruch 1,
wobei das Pumpen oder Ablassen des Wassers zusammen mit dem Schritt des Erhitzens des Wassers durch eine Wassererhitzungseinrichtung (40) erfolgt.

## Claims

1. A method for the automatic preparation of a brewed beverage with the following steps:
placing of a drinking vessel (3) or a serving vessel onto a vessel support (2),
insertion of a receptacle (5) with a brewing substance, especially tea, into a holding device (4),
filling of water into a water-storage unit (8),
displacement of the holding device (4), so that the receptacle (5) with the brewing substance is positioned in the drinking vessel (3) or in the serving vessel,
automatic pumping or draining of the water into the drinking vessel (3) or into the serving vessel,
automatic movement up-and-down and/or to-and-fro and/or in rotation of the holding device (4) in the drinking vessel (3) or the serving vessel, and
automatic withdrawal of the receptacle (5) for containing the brewing substance from the drinking vessel (3) or the serving vessel after a specified time,
**characterised in that**
after the step of withdrawal, the method comprises the following steps:
automatic checking of the vessel support (2) for whether the drinking vessel (3) or the serving vessel is present, and, when the drinking vessel (3) or the serving vessel has been removed,
release of the lower aperture of the holding device (4) through movement of a locking element (6) of the holding device (4) into a release position.

2. The method according to claim 1,
wherein the pumping or draining of the water occurs together with the step of heating the water by means of a water-heating unit (40).

## Revendications

1. Un procédé pour préparer automatiquement une boisson à infuser, comportant les étapes suivantes consistant à :
placer un récipient de boisson (3) ou un récipient de service dans un logement de récipient (2), introduire un contenant (5) avec une substance à infuser, en particulier du thé, dans un dispositif de retenue (4),
verser de l'eau dans un dispositif de stockage d'eau (8),
déplacer le dispositif de retenue (4) de sorte que le contenant (5) avec la substance à infuser est placé dans le récipient de boisson (3) ou dans le récipient de service,
pomper automatiquement ou vider l'eau dans le récipient de boisson ou dans le récipient de service,
déplacer automatiquement le dispositif de retenue (4) vers le haut et le bas et/ou vers l'avant et l'arrière et/ou en rotation dans le récipient de boisson (3) ou le récipient de service,
extraire automatiquement le contenant (5) pour recevoir la substance à infuser provenant du récipient de boisson (3) ou du récipient de service après un temps prédéterminé,
**caractérisé en ce que**
après l'étape d'extraction, le procédé comporte les étapes suivantes consistant à :
vérifier automatiquement sur le logement de récipient (2) si le récipient de boisson (3) ou le récipient le service est présent, et
lorsque le récipient de boisson (3) ou le récipient de service est retiré, libérer l'ouverture inférieure du dispositif de retenue (4) en amenant un élément de blocage (6) du dispositif de retenue (4) dans une position de libération.

2. Le procédé selon la revendication 1,
dans lequel le pompage ou la vidange de l'eau est effectué conjointement avec l'étape de chauffage de l'eau par un dispositif de chauffage d'eau (40).
